# EUROPÄISCHE PATENTSCHRIFT

(11) **EP 0 714 691 B1**
(45) Veröffentlichungstag und Bekanntmachung des Hinweises auf die Patenterteilung: **29.04.1998**
(21) Anmeldenummer: 94810673.7
(22) Anmeldetag: 29.11.1994
(51) Int. Cl.: B01D 53/86, B01D 19/00, C02F 1/20

(54) **Verfahren zum Reinigen eines Fluids mittels katalytischer Verbrennung**
Process for the purification of a fluid by catalytic combustion
Procédé pour la purification d'un fluide par combustion catalytique

(43) Veröffentlichungstag der Anmeldung: 05.06.1996
(73) Patentinhaber: Sulzer Chemtech AG, 8404 Winterthur (CH)
(72) Erfinder: Mandrin, Charles, Dr., CH-8406 Winterthur (CH)
(74) Vertreter: Trieblnig, Adolf

(56) Entgegenhaltungen:
- EP-A- 0 589 832
- FR-A- 2 189 110
- US-A- 4 892 664

## Beschreibung

Die Erfindung betrifft ein Verfahren zum Reinigen einer Flüssigkeit oder eines Gases, die mit brennbaren Stoffen verunreinigt sind, mittels katalytischer Verbrennung; sie bezieht sich auch auf Verwendungen des Verfahrens.

Bei der Rohöl- und Erdgasproduktion wird aus den Bohrungen eine Mischung von Rohöl, Erdgas und Wasser gefördert. Aufgrund von Dichteunterschieden kann dieses Gemisch in einem sogenannten Dreiphasenseparator in die drei Komponenten getrennt werden, wobei diese Trennung nicht vollständig ist. Gemäss gesetzlichen Vorschriften darf das Wasser, das ins Meer abgelassen wird, nicht stärker als mit 40 mg/m³ verunreinigt sein. Diese Bedingung ist am Wasseraustritt des Dreiphasenseparators nicht erfüllt. Mit nachgeschalteten Hydrozyklonen können hochsiedende Kohlenwasserstoffe abgetrennt werden und damit die heutigen Vorschriften erfüllt werden. Es bleibt jedoch das Problem bestehen, dass Hydrozyklone flüchtige Kohlenwasserstoffe, die gut in Wasser löslich sind, nicht abtrennen. Geeignete und kostengünstige Verfahren für die Entfernung dieser flüchtigen Stoffe sind nicht bekannt.

Bekannt ist, mittels einfachen Strippings des Wassers unter dem Einsatz von Luft oder Erdgas die flüchtigen Kohlenwasserstoffe zu entfernen. Das Stripping mit Luft führt nur zu einer Verlagerung der Verunreinigungen aus dem Wasser in die Atmosphäre. Beim Stripping mit Erdgas muss das beladene Gas aus Sicherheitsgründen verbrannt werden, was offensichtlich zu einer grossen CO₂-Belastung der Umwelt führt. Die bekannten Stripping-Verfahren sind daher ungeeignete Lösungen des Problems.

Um eine Umweltbelastung vermeiden zu können, muss die mit flüchtigen Kohlenwasserstoffen beladene Stripping-Luft als eine zu reinigende Abluft behandelt werden. Es ist bekannt, Abluft, die mit brennbaren Stoffen verunreinigt ist, einer katalytischen Verbrennung zuzuführen. Bei niedrigen Konzentrationen der Verunreinigungen sind sehr grosse Katalysatorbette nötig, wodurch sehr hohe Kosten entstehen. Bei hohen Konzentrationen besteht Explosionsgefahr.

Aufgabe der Erfindung ist, ein Verfahren zu schaffen, mit dem sich Flüssigkeiten oder Gase, die mit brennbaren Stoffen verunreinigt sind, reinigen lassen, wobei die Nachteile der bekannten Verfahren weitgehend beseitigt sein sollen. Diese Aufgabe wird durch die Merkmale des Anspruchs 1 (für Flüssigkeiten) beziehungsweise 2 (für Gase) gelöst.

Das Verfahren zum Reinigen einer mit brennbaren Stoffen verunreinigten Flüssigkeit mittels katalytischer Verbrennung umfasst folgende Schritte: Die verunreinigte Flüssigkeit wird mit einem gasförmigen Arbeitsmittel in Kontakt gebracht. Die brennbaren Stoffen werden durch Stoffaustausch zumindest teilweise in die durch das Arbeitsmittel gebildete Gasphase übertragen. Diese Gasphase wird zusammen mit Sauerstoff einem Katalysator zugeführt, mittels dem sich durch Verbrennung ein Abbau der brennbaren Stoffe und gleichzeitig eine Regeneration des gasförmigen Arbeitsmittels ergeben. Schliesslich wird das Arbeitsmittel in einen geschlossenen Kreislauf rezykliert, in den der Sauerstoff in Form von Luft eingespeist wird.

Das Verfahren zum Reinigen eines mit brennbaren Stoffen verunreinigten Gases umfasst folgende Schritte: Das verunreinigte Gas wird mit einer Flüssigkeit, insbesondere Wasser, in Kontakt gebracht. Die brennbaren Stoffen werden dabei durch Stoffaustausch zumindest teilweise in die Flüssigkeit übertragen. Diese mit den brennbaren Stoffen verunreinigte Flüssigkeit wird dann durch ein Reinigungsverfahren gemäss Anspruch 1 behandelt. Die bei diesem Reinigungsverfahren entstandene Flüssigkeit wird in einen geschlossenen Kreislauf mit dem verunreinigten Gas rezykliert.

Die Ansprüche 3 bis 11 beziehen sich auf vorteilhafte Ausführungsformen des erfindungsgemässen Verfahrens. Die Ansprüche 12 bis 14 betreffen Verwendungen des Verfahrens.

Das erfindungsgemässe Verfahren lässt sich mit einer Anlage durchführen, die bereits aus der EP-A 0 589 832 (= P.6525) bekannt ist; diese Anlage betrifft jedoch eine andere Aufgabenstellung. Die bekannte Anlage ist dazu vorgesehen, Sauerstoff aus Wasser, insbesondere aus Meerwasser, zu entfernen. Es wird dabei der Sauerstoff mittels einer katalytischen Verbrennung beseitigt.

Das Verfahren nach Anspruch 1 zeichnet sich bei er oben erwähnten Abwasserreinigung durch folgende Verbesserungen aus: Gegenüber dem Luft-Stripping ist das an die Umgebung abgegebene Gas frei von Verunreinigungen (nämlich Kohlenwasserstoffen); oder gegenüber dem Gas-Stripping mit nachgeschalteter Fackelverbrennung ist das Abgas frei von NOₓ. Die Abgasmenge ist wesentlich geringer. Explosive Mischungen können vermieden werden und zwar sowohl in der Anlage als auch ausserhalb bei Leckverlusten.

Bei dem Verfahren nach Anspruch 2 liegen bezüglich der erwähnten Abluftreinigung folgende Verbesserungen vor:

Das Katalysatorbett ist wesentlich kleiner, da sich beim erfindungsgemässen Verfahren eine Aufkonzentrierung der zu entfernenden Stoffen ergibt. Explosive Mischungen sind vermeidbar, weil für das zweite Arbeitsmittel die Verwendung eines Inertgases vorgesehen ist.

Die katalytische Verbrennung wird unter einem vorgegebenen Druck durchgeführt. In der Flüssigkeit, die in einer Desorptionseinrichtung, beispielsweise in einer Kolonne, behandelt wird, löst sich laufend gasförmiges Arbeitsmittel und geht daher für den Prozess verloren. Zur Einstellung des Drucks muss zusätzliches Inertgas, insbesondere Stickstoff, zugeführt werden. Bei den nachfolgend beschriebenen Ausführungsbeispielen wird Stickstoff mit der Zusatzluft im Überschuss zugeführt. Für die Einstellung des Drucks muss - wegen des Überschusses - Gas aus dem Prozess entfernt werden.

Beim erfindungsgemässen Verfahren wird Sauerstoff benötigt, der in Form von Luft in den geschlossenen Gaskreislauf eingespeist wird. Brennbare Verunreinigungen und gegebenenfalls Erdgas werden vollständig eliminiert. Der Sauerstoff wird teilweise verbraucht und der Ueberschuss löst sich hauptsächlich in den gereinigten Flüssigkeiten.

Die Löslichkeit von Sauerstoff in Flüssigkeiten ist wesentlich grösser als für Stickstoff. Stickstoff aus der Luft, der nicht durch Verbrennung verbraucht wird, löst sich nur wenig in den gereinigten Flüssigkeiten. Daher reichert sich das im geschlossenen Kreislauf zirkulierende Gas mit Stickstoff an, und es ist nicht notwendig, reinen Stickstoff in das Verfahren einzuspeisen, um ein überwiegend aus Stickstoff bestehendes Gas im geschlossenen Kreislauf zu erhalten. Die Tatsache, dass das Gas hauptsächlich aus Stickstoff besteht, hat eine grosse Bedeutung für die Sicherheit. Explosionen können weder im Kreislauf, noch im Falle von Leckverlusten in der Atmosphäre entstehen; dies gilt auch bei einem Vakuumbetrieb, wenn Luft in den Kreislauf eindringt.

Das im Kreislauf zirkulierende Gas enthält meistens weniger als 3% Sauerstoff. Dieses stickstoffreiche Gas fällt im Überschuss an und muss daher teilweise aus dem Verfahren entfernt werden. Dieses abgegebene Gas kann als Inertgas für folgende Zwecke verwendet werden: Spülung von Leitungen und Behälter, die vor der Inbetriebsetzung mit Luft gefüllt sind und die anschliessend mit Kohlenwasserstoff betrieben werden. Entfernung von Sauerstoff aus Meerwasser, siehe beispielsweise EP-A 0 589 832. Nachspeisung von Deckgas in Oeltanker.

Der Gasdurchsatz im Kreislauf muss zwei Bedingungen erfüllen:
1. Der Durchsatz muss gross genug sein, damit die Verunreinigungen aus der Flüssigkeit vollständig entfernbar sind.
2. Die Temperaturen in der katalytischen Verbrennung müssen hoch genug sein, um eine vollständige Vernichtung der Verunreinigungen sicherzustellen; andererseits dürfen sie nicht zu hoch sein, damit der Katalysator nicht beschädigt wird.

Es ist wirtschaftlich, einen kleinen Gasdurchsatz vorzusehen. Es sind dann die Abmessungen der Anlage, insbesondere des Katalysatorbettes, klein und ebenfalls ist der Energieverbrauch für die Gasumwälzung klein. Der Gasdurchsatz muss jedoch gross genug sein, um die Verunreinigungen aus der Flüssigkeit wirksam entfernen zu können. Gegebenenfalls kann die Wirksamkeit des Strippings mittels eines Vakuumbetriebs und/oder durch eine Temperaturerhöhung verbessert werden.

Bei der Förderung von Rohöl auf Bohrinseln wird das Rohöl oft mit Schiffen, sogenannten "Shuttle Tanker", transportiert. Dabei ist das Rohöl Quelle von flüchtigen Kohlenwasserstoffen, die bei der Beladung des Tankers in die Luft entweichen. Bezüglich diesem Problem kann das erfindungsgemässe Verfahren Abhilfe schaffen, indem behandeltes Rohöl transportiert wird, aus dem die flüchtigen Komponenten mit Stickstoff erfindungsgemäss entfernt worden sind.

Nachfolgend wird die Erfindung anhand von Ausführungsbeispielen im Zusammenhang mit den Zeichnungen erläutert. Es zeigen:
- Fig. 1: eine Anlage zum erfindungsgemässen Entfernen von organischen Stoffen aus Abwasser, das bei der Erdölförderung entsteht,
- Fig. 2: eine Anlage zum erfindungsgemässen Entfernen von beispielsweise Aceton aus Luft und
- Fig. 3: eine Anlage wie in Fig.1 für einen Vakuumbetrieb.

Die Figuren 4 bis 6 zeigen weitere modifizierte Anlagen.

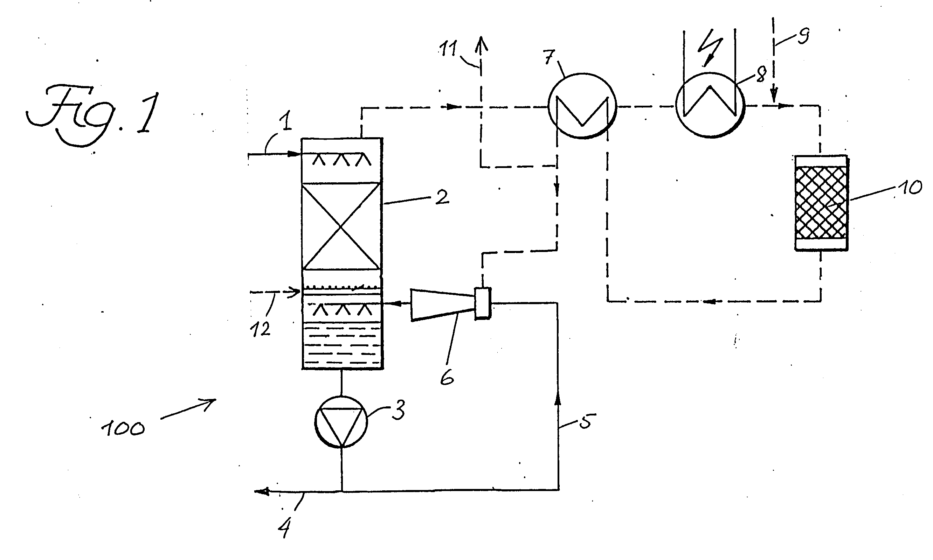

Die Anlage 100 in Fig.1 umfasst folgende Teile: Eine Desorptionskolonne 2, eine Pumpe 3, einen Ejektor 6, einen Gegenstrom-Wärmetauscher 7, einen Anfahrerhitzer 8 und ein Katalysatorbett 10.

Der Anfahrerhitzer 8 ist im Normalbetrieb nicht in Funktion. Über die Leitung 9 kann Erdgas zugespeist werden, wenn der Heizwert des mit brennbaren Stoffen beladenen Gases nicht ausreicht, im Katalysatorbett 10 eine geeignete Temperatur herzustellen, nämlich eine Temperatur, die über einem für die katalytische Verbrennung nötigen Minimalwert liegt.

Die Anlage 100 kann dazu verwendet werden, aus dem bei der Rohölproduktion entstehenden Abwasser ("produced water") flüchtige, organische Verbindungen, sogenannte VOC (volatile organic compounds), zu entfernen. Das in der Anlage 100 durchgeführte Verfahren wird anhand von folgendem Ausführungsbeispiel beschrieben (vgl. E&P Forum Report No. 2.62/204, January 1994, p.38, Table 6):

200 m³/h Abwasser ("produced water"), das 5 mg/l Benzol, 2 mg/l, Toluol und 7 mg/l Xylol enthält, wird durch die Leitung 1 der Kolonne 2 zugeführt. Das Wasser wird im Gegenstrom mit Gas, das über den Ejektor 6 eingespeist wird, durch Desorption von Benzol, Toluol und Xylol gereinigt. Das als Arbeitsmittel dienende Gas besteht hauptsächlich aus Stickstoff, der weniger als 10ppb (Mol) Benzol, 10 ppb (Mol) Toluol und 10 ppb (Mol) Xylol enthält. Das behandelte Wasser, das den Sumpf der Kolonne 2 und die Anlage über die Leitung 4 verlässt, ist praktisch frei von Benzol, Toluol und Xylol (Mol-Konzentrationen im ppb-Bereich), so dass es in das Meer entsorgt werden kann.

Das mit Benzol, Toluol und Xylol kontaminierte Gas, gelangt nach dem Austritt aus der Kolonne 2 in den Gegenströmer 7, wo es vorgewärmt wird. Über die Leitung 9 muss kein Erdgas zugespeist werden. Nach Passieren des Anfahrerhitzers 8, strömt das Gas in das Katalysatorbett 10, wo die katalytische Verbrennung des Benzols stattfindet. Die brennbaren Stoffe werden vollständig verbrannt und erzeugen am Ein- und Austritt des Katalysatorbetts 10 geeignete Temperaturen.

Das erwärmte, regenerierte Gas, das frei von Benzol, Toluol und Xylol ist, wird im Gegenströmer 7 abgekühlt und anschliessend durch den Ejektor 6 als Stripping-Gas in die Kolonne 2 rezirkuliert.

Der Sauerstoff für die Verbrennung wird mit Luft durch die Leitung 12 in das Verfahren eingespeist. Durch diese Zusatzluft wird gleichzeitig Stickstoff eingetragen. Um den Druck in der Anlage 100 konstant halten zu können, muss ein Teil des rezirkulierten Gases an die Umgebung abgegeben werden; dies geschieht über die Leitung 11.

Die Betriebsdaten für die Zu- und Abfuhr von Gasen lauten für das gewählte Beispiel wie folgt:
• Zugabe von Luft, Leitung 12: 35 Nm³/h
• Abgas in der Leitung 11: 29 Nm³/h
• Gaszusammensetzung im geschlossenen Kreislauf:
- Am Eintritt des Katalysators:

| | |
|---|---|
| Benzol | 0.0297 % (Mol) |
| Toluol | 0.0100 % (Mol) |
| Xylol | 0.0300 % (Mol) |
| CO₂ | 4.76 % (Mol) |
| N₂ | 90.79 % (Mol) |
| O₂ | 4.38 % (Mol) |

- Am Austritt des Katalysators und in der Leitung 11:

| | |
|---|---|
| Benzol | 10⁻⁷ % (Mol) |
| Toluol | 10⁻⁷ % (Mol) |
| Xylol | 10⁻⁷ % (Mol) |
| CO₂ | 5.20 % (Mol) |
| N₂ | 90.99 % (Mol) |
| O₂ | 3.75 % (Mol) |

Diese Zusammensetzungen ergeben sich aus einer Bilanz, bei der die Zuspeisungen, die Entnahmen, die Verbrennung im Katalysator und die Löslichkeiten der verschiedenen Gase im Wasser zugrunde gelegt werden.

Es sei darauf hingewiesen, dass Stickstoff sehr wenig und CO₂ sehr gut in Wasser löslich sind. Deshalb reichert sich der geschlossene Kreislauf mit Stickstoff an.

Das von Benzol, Toluol und Xylol befreite Wasser, das sich im Sumpf der Kolonne 2 ansammelt, wird teilweise durch die Pumpe 3 und die Leitung 5 in den Ejektor 6 gefördert, wo es als Treibstrahl zum Einsatz kommt.

Das Ausführungsbeispiel betrifft eine Strippingkolonne 2, die bei 70°C und 1.1 bara betrieben wird. Die Wärme, die bei der katalytischen Verbrennung freigesetzt wird, hat eine Temperaturerhöhung von 0.14°C zur Folge.

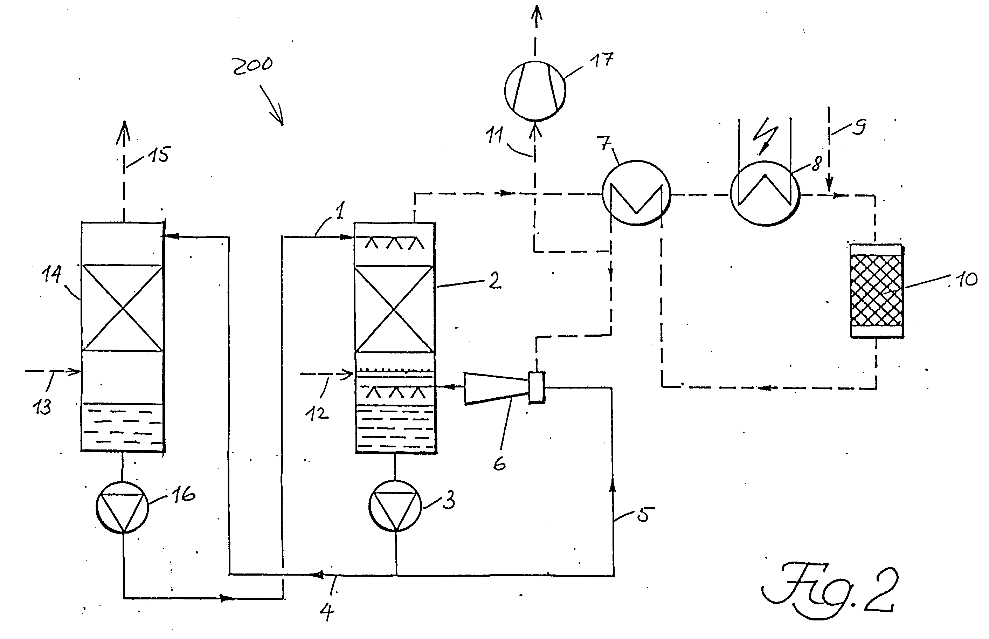

Die Anlage 200 in Fig.2 umfasst die gleichen Teile wie die Anlage 100. Zusätzlich liegt hier eine Absorptionskolonne 14, eine Pumpe 16 und eine Vakuumpumpe 17 vor.

Das in der Anlage 200 durchgeführte Verfahren wird anhand von folgendem Ausführungsbeispiel beschrieben:

Durch die Leitung 13 wird 12000 Nm³/h Luft, 2,5 g/Nm³ Aceton enthaltend, in die Kolonne 14 eingespeist, wo Aceton mit Wasser (erstes Arbeitsmittel) ausgewaschen wird. Die gereinigte Luft wird mit weniger als 150 mg/Nm³ Aceton durch die Leitung 15 abgeblasen. Die Temperatur in der Kolonne 14 ist rund 20°C und der Druck ist atmosphärisch.

Das mit Aceton beladene Wasser wird durch die Pumpe 16 aus dem Sumpf der Kolonne 14 und eine Leitung 1 in die Desorptionskolonne 2 gefördert, wo es im Gegenstrom zu einem zweiten, gasförmigen Arbeitsmittel gereinigt wird. Das Gas, das mit dem Ejektor 6 in die Kolonne 2 eingespeist wird, besteht überwiegend aus Stickstoff und enthält weniger als 1ppm (Mol) Aceton. Die weiteren Verfahrensschritte sind im wesentlichen gleich wie beim Ausführungsbeispiel zur Anlage 100. Es wird Überschussgas durch die Leitung 11 und die Vakuumpumpe 17 abgesaugt. Der Druck im geschlossenen Gaskreislauf ist 0.21 bara. Im Katalysatorbett 10 werden 30 kg/h Aceton verbrannt.

In dem mit Aceton beladenen Wasser aus Kolonne 14 ist Sauerstoff und Stickstoff gelöst. Die katalytische Verbrennung kann teilweise mit dem Sauerstoff, der parallel zum Aceton in Kolonne 2 desorbiert wird, stattfinden. Es wird auch hier wieder Zusatzluft über die Leitung 12 zugeführt.

Die Betriebsdaten für die Zu- und Abfuhr von Gasen lauten für das gewählte Beispiel wie folgt:
• Abluft, Leitung 13:
12000 Nm³/h Luft
2.5 g/Nm³ Aceton
• Gereinigte Abluft, Leitung 15:
12000 Nm³/h Luft
0.15 g/Nm³ Aceton
• Zugabe von Luft, Leitung 12: 469 Nm³/h
• Zugabe von Erdgas, Leitung 9: keine
• Abgas, Leitung 11: 451 Nm³/h
• Gaszusammensetzung im geschlossenen Kreislauf:
- Am Eintritt des Katalysators:

| | |
|---|---|
| Acetondampf | 0.35 % (Mol) |
| CO₂ | 14.24 % (Mol) |
| N₂ | 81.39 % (Mol) |
| O₂ | 4.02 % (Mol) |

- Am Austritt des Katalysators und in der Leitung 11:

| | |
|---|---|
| Acetondampf | < 10⁻⁴ % (Mol) |
| CO₂ | 15.32 % (Mol) |
| N₂ | 82.1 % (Mol) |
| O₂ | 2.58 % (Mol) |

Die Wärme, die bei der katalytischen Verbrennung entsteht, muss abgeführt werden. Mit dem Wärmetauscher 7 wird diese Wärme auf das Gas und das Wasser in der Desorptionskolonne 2 übertragen. In dem beschriebenen Beispiel wird aus diesem Grund die Desorptionskolonne auf rund 35°C aufgeheizt. Das warme Wasser, das durch die Leitung 4 in die Absorptionskolonne gespeist wird, kühlt sich durch Verdunstung ab.

Anstelle von Aceton können mit dem erfindungsgemässen Verfahren auch andere organische Lösungsmittel, wie Methanol, Ethanol und Isopropanol oder Gemische dieser Stoffe, aus einer Abluft entfernt werden.

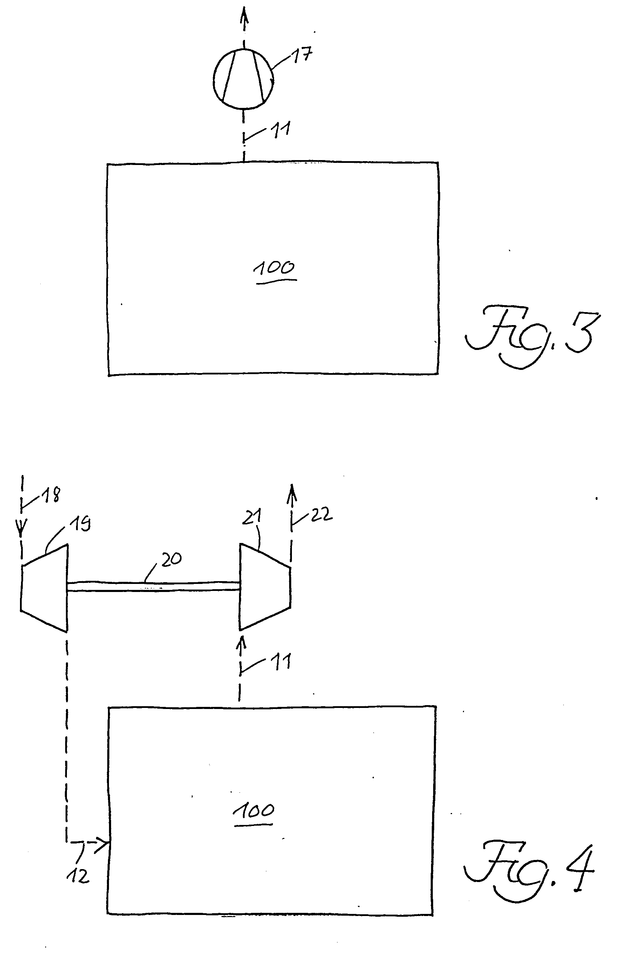

Eine Möglichkeit, die Strippingbedingungen zu verbessern und damit den Gasdurchsatz im geschlossenen Kreislauf zu verkleinern sowie gegebenenfalls die Zugabe von Brennstoff zu vermindern oder zu vermeiden, ist, im Kreislauf einen unteratmosphärischen Druck vorzusehen. Fig. 3 zeigt eine Anlage zum erfindungsgemässen Entfernen von organischen Stoffen aus Abwasser, das bei der Erdölförderung entsteht, wobei die Konzentration der organischen Stoffe so tief ist, dass ein Vakuumbetrieb von Vorteil ist. (Der in Fig.3 dargestellte Block 100 entspricht der Anlage aus Fig.1.) Mit einer Vakuumpumpe 16 wird Überschussgas abgesaugt. Ein Vorteil dieses Verfahrens gegenüber dem Stand der Technik besteht darin, dass die abzusaugende Überschussmenge viel kleiner ist als der Durchsatz bei einem bekannten offenen System.

Eine weitere Möglichkeit, die Strippingbedingungen zu verbessern und den Gasdurchsatz im geschlossenen Kreislauf zu verkleinern besteht darin, die Kolonne 2 warm, zum Beispiel bei 70°C, zu betreiben. Dadurch entsteht ein beträchtlicher Partialdruck von Wasserdampf; die Partialdrücke von Verunreinigungen, Sauerstoff, Stickstoff und CO₂ werden entsprechend vermindert. Als Wärmeguellen kommen in Frage: das "Produced Water" selbst, das in der Regel warm geliefert wird; oder die bei der katalytischen Verbrennung freigesetzte Wärme. Vorteilhaft ist, das warme Strippingverfahren mit dem Vakuumstripping zu kombinieren.

Die Anlage in Fig.3 ist - wie die Anlage 100 in Fig.1 - für die Reinigung von Abwasser aus der Ölproduktion vorgesehen. In diesem zweiten Fall liegen jedoch die Konzentrationen der flüchtigen Komponenten so tief, dass es vorteilhaft ist, das Verfahren bei einem Druck von nur 0.4 bara zu betreiben. Dieser tiefe Druck wird mit der Vakuumpumpe 17 erzeugt. 200 m³/h Abwasser ("produced water"), das 0.4 mg/l Benzol, 0.01 mg/l Toluol und 0.1 mg/l Xylol enthält, wird so gereinigt, dass das behandelte Wasser weniger als 1 ppb Benzol, Toluol und Xylol enthält, und in das Meer entsorgt werden kann. Die Betriebsdaten für die Zu- und Abfuhr von Gasen lauten für das gewählte Beispiel wie folgt:
- Zugabe von Luft, Leitung 12: 4.4 Nm³/h
- Zugabe von Erdgas, Leitung 9: 0.29 Nm³/h
- Abgas in der Leitung 11 und
   in der Vakuumpumpe 17: 14.5 Nm³/h,
   wobei Wasserdampf: 10.88 Nm³/h
   und 0₂ / N₂ / CO₂ Mischung: 3.62 Nm³/h.

Der grosse Anteil an Wasserdampf entsteht aufgrund der Betriebsbedingungen in der Kolonne 2:

| | |
|---|---|
| Temperatur: | 70°C |
| Partialdruck der Wasserdampfer: | 0.3 bar a |
| Partialdruck der anderen Gase: | 0.1 bar a |
| Betriebsdruck: | 0.4 bar a |

• Gaszusammensetzung im geschlossenen Kreislauf:
- Am Eintritt des Katalysators:

| | |
|---|---|
| Benzol | 0.0237 % (Mol) |
| Toluol | 0.0005 % (Mol) |
| Xylol | 0.0043 % (Mol) |
| Wasserdampf | 75 % (Mol) |
| CO₂ | 0.661 % (Mol) |
| N₂ | 22.707 % (Mol) |
| O₂ | 1.603 % (Mol) |

- Am Austritt des Katalysators, in der Leitung 11 und in der Pumpe 17:

| | |
|---|---|
| Benzol | 10⁻⁷ % (Mol) |
| Toluol | 10⁻⁷ % (Mol) |
| Xylol | 10⁻⁷ % (Mol) |
| Erdgas | 10⁻⁷ % (Mol) |
| Wasserdampf | 75.82 % (Mol) |
| CO₂ | 1.14 % (Mol) |
| N₂ | 22.26 % (Mol) |
| O₂ | 0.78 % (Mol) |

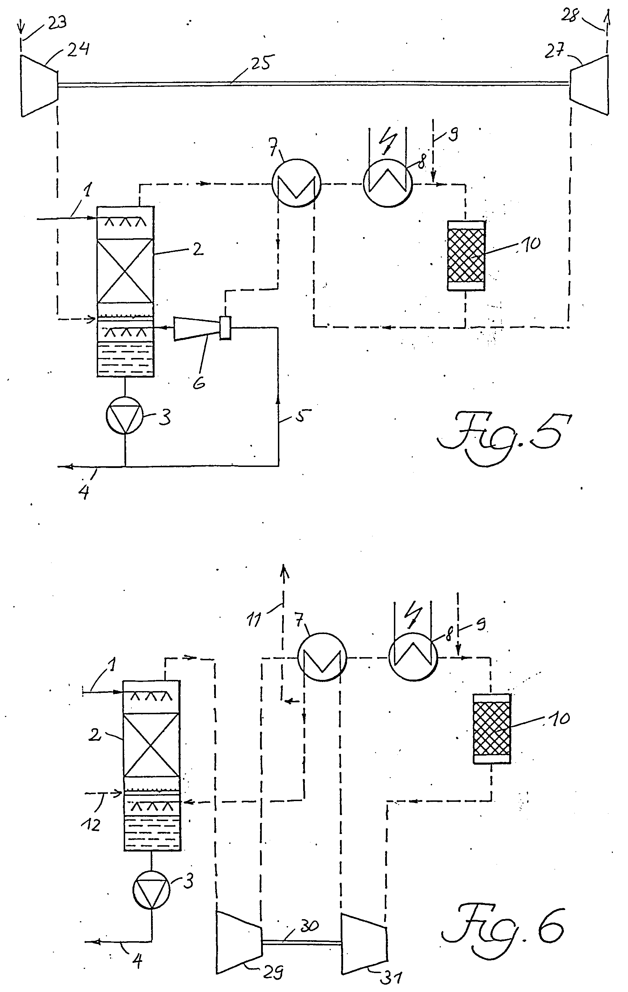

Ein Nachteil des Vakuumstrippings ist die Notwendigkeit einer Vakuumpumpe und der damit verbundene Energieverbrauch. Dieser Nachteil kann mit der Anlage der Fig.4 behoben werden. Diese Anlage ist eine Modifikation der Anlage nach Fig.3: die Vakuumpumpe ist durch einen mit Druckluft angetriebenen Turbolader ersetzt.

Die Luft, die in der Regel als Druckluft mit 6 bara zur Verfügung steht, wird nicht direkt durch die Leitung 12 sondern über eine Expansionsturbine 19 zugeführt. Diese Expansionsturbine 19 ist der Antrieb des Vakuumkompressors 21. Die ganze Gruppe, bestehend aus Turbine 19, Welle 20 und Kompressor 21, ist vorzugsweise ein "Turbolader". Turbolader sind serienmässig hergestellte Gruppen für die Leistungsverbesserung von Kolbenmotoren wie zum Beispiel Dieselmotoren für Lastwagen oder auch Benzinmotoren für Personenwagen (sogenannte Turbo-Automobile).

Falls die Strippingbedingungen in der Kolonne 2 günstig sind (hohe Temperatur, geringe Löslichkeit der Verunreinigungen in der Flüssigkeit, hohe Konzentration und damit hoher Heizwert der Verunreinigungen), dann ergibt sich der erforderliche Gasdurchsatz aufgrund der Erwärmung im Katalysatorbett 10. Es ist von Vorteil, den Kreislauf unter einem wesentlichen Überdruck, zum Beispiel bei 4 bara, zu betreiben. Der Nachteil ist ein beträchtlicher Verbrauch an Druckluft. Dieser Nachteil kann mit der Anlage der Fig.5 behoben werden.

Fig.5 zeigt eine weitere modifizierte Anlage, bei der die Druckluft von einem mit Abgas angetriebenen Turbolader geliefert wird. Diese Anlage ist in solchen Fällen geeignet, in denen die Konzentration der Verunreinigungen hoch ist und ein Betrieb unter Druck von Vorteil ist.

Die Luft wird aus der Atmosphäre und nicht aus einem Druckluftnetz bezogen; sie wird mit dem Kompressor 24 und durch die Leitung 12 in die Kolonne 2 eingespeist. Der Kompressor 24 wird durch die Turbine 27 sowie Überschussgas aus dem geschlossenen Kreislauf angetrieben. Der Kompressor 24, die Welle 25 und die Turbine 27 sind vorzugsweise eine "Turboladergruppe".

Es ist nicht vorteilhaft, das Gas im geschlossenen Kreislauf mit einem Kompressor umzuwälzen, der von einem Elektromotor angetrieben ist. Solche Kompressoren, die relativ klein sind, weisen eine ungenügende Betriebssicherheit auf und benötigen einen grossen Aufwand für ihren Unterhalt. Deshalb ist eine Pumpe-Ejektor-Kombination vorteilhaft, bei der das gasförmige Arbeitsmittel durch einen Ejektor rezirkuliert wird und der Treibstrahl für diesen Ejektor eine mit einer Pumpe rezirkulierte Flüssigkeit ist. Die Figuren 1 bis 5 zeigen diese Kombination. Die Pumpe 3, mit der der Treibstrahl für den Ejektor 6 erzeugt wird, dient auch zur Weiterförderung der gereinigten Flüssigkeit.

Eine weitere Möglichkeit zur Gasumwälzung im geschlossenen Kreislauf zeigt Fig.6. In der Anlage der Fig.6 wird die Umwälzung mit einem Turbolader durchgeführt. Die Kolonne 2 steht unter einem tieferen Druck, zum Beispiel 1.1 bara, und das Katalysatorbett 10 unter einem höheren Druck, zum Beispiel 6 bara. Das zu reinigende Gas wird mit dem Kompressor 29 verdichtet. Dieser Kompressor 29 wird mit der Turbine 31 (Welle 30) und durch das warme Hochdruckgas, das das Katalysatorbett 10 verlässt, angetrieben. Der Kompressor 29, die Welle 30 und die Turbine 31 bilden vorzugsweise eine "Turboladergruppe".

## Patentansprüche

1. Verfahren zum Reinigen einer mit brennbaren Stoffen verunreinigten Flüssigkeit mittels katalytischer Verbrennung, wobei die verunreinigte Flüssigkeit mit einem gasförmigen Arbeitsmittel in Kontakt gebracht wird und die brennbaren Stoffen durch Stoffaustausch zumindest teilweise in die durch das Arbeitsmittel gebildete Gasphase übertragen werden, diese Gasphase zusammen mit Sauerstoff einem Katalysator zugeführt wird, mittels dem sich durch Verbrennung ein Abbau der brennbaren Stoffe und gleichzeitig eine Regeneration des gasförmigen Arbeitsmittels ergeben, und schliesslich das Arbeitsmittel in einen geschlossenen Kreislauf rezykliert wird, in welchen der Sauerstoff in Form von Luft eingespeist wird.

2. Verfahren zum Reinigen eines mit brennbaren Stoffen verunreinigten Gases, wobei das verunreinigte Gas mit einer Flüssigkeit, insbesondere Wasser, in Kontakt gebracht wird und dabei die brennbaren Stoffen durch Stoffaustausch zumindest teilweise in die Flüssigkeit übertragen werden, diese mit den brennbaren Stoffen verunreinigte Flüssigkeit dann durch ein Reinigungsverfahren gemäss Anspruch 1 behandelt wird, und die bei diesem Reinigungsverfahren entstandene Flüssigkeit in einen geschlossenen Kreislauf zum Kontakt mit dem verunreinigten Gas rezykliert wird.

3. Verfahren nach Anspruch 1 oder 2, dadurch gekennzeichnet, dass die katalytische Verbrennung unter einem vorgegebenen Druck durchgeführt wird und dass die Einstellung dieses Drucks mittels eines zusätzlichen Inertgases, insbesondere Stickstoff, vorgenommen wird.

4. Verfahren nach einem der Ansprüche 1 bis 3, dadurch gekennzeichnet, dass gegebenenfalls eine nötige Reduktion des Drucks durch Abgabe von gasförmigem Arbeitsmittel hergestellt wird.

5. Verfahren nach einem der Ansprüche 1 bis 4, dadurch gekennzeichnet, dass ein zusätzlicher Brennstoff, insbesondere Erdgas, dem gasförmigen Arbeitsmittel zugemischt wird, um die Temperatur im Katalysator über einen für die katalytische Verbrennung nötigen Minimalwert zu erhöhen.

6. Verfahren nach Anspruch 4 oder 5, dadurch gekennzeichnet, dass die Verunreinigungen in einer Anlage bei einem unteratmosphärischen Druck auf das gasförmige Arbeitsmittel übertragen werden, und dass gasförmiges Arbeitsmittel mit einer Vakuumpumpe aus der Anlage gefördert wird.

7. Verfahren nach Anspruch 6, dadurch gekennzeichnet, dass Luft für die Sauerstoffeinspeisung einer Druckluftquelle entnommmen wird und dass die Vakuumpumpe durch Entspannung dieser Druckluft angetrieben wird.

8. Verfahren nach einem der Ansprüche 4 oder 5, dadurch gekennzeichnet, dass das gasförmige Arbeitsmittel unter einen Druck, der grösser als der Atmosphärendruck ist, gesetzt wird und dass die Zufuhr von Luft aus der Atmosphäre durch Expansion von abgegebenem gasförmigen Arbeitsmittel angetrieben wird.

9. Verfahren nach einem der Ansprüche 1 bis 8, dadurch gekennzeichnet, dass die katalytische Verbrennung unter einem Druck durchgeführt wird, der höher als der Druck bei der Uebertragung der Verunreinigungen auf das gasförmige Arbeitsmittel ist, dass das gasförmige Arbeitsmittel auf den Katalysatordruck komprimiert wird, und dass durch eine Koppelung der Kompression mit einer Expansion des warmen, den Katalysator verlassenden Arbeitsmittels zumindest ein Teil der Kompressionsarbeit aufgebracht wird.

10. Verfahren nach einem der Ansprüche 2 bis 8, dadurch gekennzeichnet, dass das gasförmige Arbeitsmittel mittels eines Ejektors rezykliert wird und dass der Treibstrahl für den Ejektor mit einer Pumpe für die rezyklierte Flüssigkeit erzeugt wird.

11. Verfahren nach einem der Ansprüche 1 bis 10, dadurch gekennzeichnet, dass in dem Kreislauf des gasförmigen Arbeitsmittels Druck, Temperatur und Gasdurchsatz derart eingestellt werden, dass die Gaszusammensetzung im ganzen Kreislauf unter der Explosionsgrenze liegt.

12. Verwendung des Verfahrens gemäss Anspruch 1 und einem der Ansprüche 3 bis 11, zum Reinigen von bei der Rohölproduktion entstehendem Abwasser, wobei die verunreinigenden Stoffe flüchtige, organische Verbindungen sind.

13. Verwendung des Verfahrens gemäss Anspruch 1 und einem der Ansprüche 3 bis 11, zum Entfernen von flüchtigen Komponenten aus Rohöl vor dem Beladen von Transportschiffen mit Stickstoff als gasförmigem Arbeitsmittel.

14. Verwendung des Verfahrens gemäss Anspruch 2 und einem der Ansprüche 3 bis 11, zum Reinigen von Abluft, wobei die verunreinigenden Stoffe oder Stoffgemische organische Lösungsmittel sind, insbesondere Aceton, Methanol, Ethanol und/oder Isopropanol.

## Claims

1. Process for purifying a liquid contaminated with combustible substances by means of catalytic combustion, wherein the liquid to be purified is brought into contact with a gaseous working medium, and the combustible materials are at least partially transferred by material transfer into the gas phase formed by the working medium; wherein this gas phase together with oxygen is supplied to a catalyser by means of which a decomposition of the combustible substances and at the same time a regeneration of the gaseous working medium takes place via combustion; and wherein finally the working medium is recirculated in a closed cycle, into which oxygen is led in the form of air.

2. Process for purifying a gas contaminated with combustible substances, wherein the contaminated gas is brought into contact with a liquid, in particular water, and the combustible substances are at least partially transferred into the liquid by material transfer and this liquid contaminated with combustible substances is then treated by a treatment process in accordance with claim 1 and the liquid arising in this cleaning process is recycled in a closed circuit for the contact with the contaminated gas.

3. Process in accordance with claim 1 or claim 2, characterised in that the catalytic combustion is carried out at a predetermined pressure, and in that the adjustment of this pressure is undertaken by means of an additional inert gas, in particular nitrogen.

4. Process in accordance with one of the claims 1 to 3, characterised in that, if necessary, a required reduction of the pressure is produced by giving off gaseous working medium.

5. Process in accordance with one of the claims 1 to 4, characterised in that an additional fuel, in particular natural gas, is admixed to the gaseous working medium in order to increase the temperature in the catalyser to above a minimum value required for the catalytic combustion.

6. Process in accordance with one of the claims 4 or 5, characterised in that the contaminants are transferred to the gaseous working medium in a plant at a pressure below atmospheric, and in that the gaseous working medium is forwarded out of the plant with a vacuum pump.

7. Process in accordance with claim 6, characterised in that the air for the infeed of oxygen is taken from a compressed air source, and in that the vacuum pump is driven via relaxation of this compressed air.

8. Process in accordance with one of the claims 4 or 5, characterised in that the gaseous working medium is set under a pressure larger than the atmospheric pressure, and in that the supply of air from the atmosphere is driven by the expansion of released gaseous working medium.

9. Process in accordance with one of the claims 1 to 8, characterised in that the catalytic combustion is carried out under a pressure which is higher than the pressure pertaining during the transfer of the contaminants to the gaseous working medium, in that the gaseous working medium is compressed to the catalyser pressure, and in that at least a part of the work associated with the compression is provided by a coupling of the compression with an expansion of the warm working medium leaving the catalyser.

10. Process in accordance with one of the claims 2 to 8, characterised in that the gaseous working medium is recycled by means of an ejector, and in that the drive stream for the ejector is produced with a pump for the recirculated liquid.

11. Process in accordance with one of the claims 1 to 11, characterised in that, pressure, temperature and gas flow rate are adjusted in the circuit of the gaseous working medium, so that the gas composition lies under the explosion threshold over the whole cycle.

12. Use of the process in accordance with claim 1 and one of the claims 3 to 11 for purifying waste water arising during crude oil production, wherein the contaminating substances are volatile, organic compounds.

13. Use of the process in accordance with claim 1 and one of the claims 3 to 11 for removing volatile components from crude oil prior to loading transport ships with nitrogen as the gaseous working medium.

14. Use of the process in accordance with claim 2 and one of the claims 3 to 11 for purifying exhaust gas, wherein the contaminating substances or mixtures of substances are organic solvents, in particular acetone, methanol, ethanol, and/or isopropanol.

## Revendications

1. Procédé pour la purification d'un liquide contaminé par des matières combustibles au moyen d'un combustion catalytique, où le liquide contaminé est mis en contact avec une substance active gazeuse et les matières combustibles sont transmises par échange de matières, au moins partiellement dans la phase gazeuse formée par la substance active, cette phase gazeuse est conduite avec de l'oxygène à un catalyseur, au moyen duquel il se produit, par combustion, une décomposition de la matière combustible et simultanément une régénération de la substance active gazeuse, et enfin, la substance active est recyclée dans un circuit fermé où l'oxygène est accumulé sous la forme d'air.

2. Procédé pour la purification d'un gaz contaminé par des matières combustibles où le gaz contaminé est mis en contact avec un liquide, en particulier de l'eau et en outre les matières combustibles sont transmises par échange de matières, au moins partiellement dans le liquide, ce liquide contaminé des matières combustibles est alors traité par un procédé de purication selon la revendication 1 et le liquide résultant de ce procédé de purification est recyclé dans un circuit fermé pour un contact avec le gaz contaminé.

3. Procédé selon la revendication 1 ou 2, caractérisé en ce que la combustion catalytique est accomplie à une pression prédéterminée et en ce que l'ajustement de cette pression est entrepris au moyen d'un gaz inerte supplémentaire, en particulier de l'azote.

4. Procédé selon l'une des revendications 1 à 3, caractérisé en ce que, le cas échéant, une réduction nécessaire de la pression est produite par dégagement de la substance active gazeuse.

5. Procédé selon l'une des revendications 1 à 4 caractérisé en ce qu'un combustible supplémentaire, en particulier du gaz naturel, est mélangé à la substance active gazeuse, pour augmenter la température dans le catalyseur au-dessus d'une valeur minimale nécessaire à la combustion catalytique.

6. Procédé selon la revendication 4 ou 5, caractérisé en ce que les impuretés sont transmises dans une installation à une pression subatmosphérique, à la substance active gazeuse et en ce que la substance active gazeuse est extraite de l'installation au moyen d'une pompe à vide.

7. Procédé selon la revendication 6, caractérisé en ce que de l'air pour la fourniture d'oxygène est prélevé d'une source d'air sous pression et en ce que la pompe à vide est entraînée par détente de cet air sous pression.

8. Procédé selon l'une des revendications 4 ou 5, caractérisé en ce que la substance active gazeuse est établie à une pression qui est plus grande que la pression atmosphérique et en ce que la fourniture d'air provenant de l'atmosphère se produit par dilatation de la substance active gazeuse dégagée.

9. Procédé selon l'une des revendications 1 à 8, caractérisé en ce que la combustion catalytique est accomplie à une pression qui est plus haute que la pression lors de la transmission des impuretés à la substance active gazeuse, en ce que la substance active gazeuse est comprimée à la pression du catalyseur et en ce que, par un couplage de la compression avec une dilatation de la substance active chaude quittant le catalyseur, on produit au moins une partie du travail de compression.

10. Procédé selon l'une des revendications 2 à 8, caractérisé en ce que la substance active gazeuse est recyclée au moyen d'un éjecteur et en ce que le jet de propulsion de l'éjecteur est produit avec une pompe pour le liquide recyclé.

11. Procédé selon l'une des revendications 1 à 10, caractérisé en ce que dans le circuit de la substance active gazeuse, la pression, la température et le débit de gaz sont ajustés de manière que la composition du gaz dans tout le circuit se trouve en dessous de la limite d'explosion.

12. Utilisation du procédé selon la revendication 1 et l'une des revendications 3 à 11 pour la purification des eaux résiduelles provenant de la production du pétrole, où les matières contaminées sont des composés organiques volatils.

13. Utilisation du procédé selon la revendication 1 et l'une des revendications 3 à 11 pour l'élimination de composants volatils du pétrole avant le chargement des bateaux de transport, au moyen d'azote en tant que substance active gazeuse.

14. Utilisation du procédé selon la revendication 2 et l'une des revendications 3 à 11 pour la purification de l'air d'échappement où les matières contaminantes ou le mélange de matières sont des solvants organiques, en particulier l'acétone, le méthanol, l'éthanol et/ou l'isopropanol.
